# EUROPÄISCHE PATENTANMELDUNG

(11) **EP 0 913 441 A1**
(43) Veröffentlichungstag der Anmeldung: **06.05.1999**
(21) Anmeldenummer: 98117636.5
(22) Anmeldetag: 17.09.1998
(51) Int. Cl.: C09D 167/00

(54) **Beschichtungen auf Basis thermoplastischer Polyester und eines Zusatzharzes (Keton-Aldehyd-Kondensat)**

(30) Priorität: 03.11.1997 DE 19748467
(71) Anmelder: HÜLS AKTIENGESELLSCHAFT, 45764 Marl (DE)
(72) Erfinder: Zagefka, Hans-Dieter Dr., 45721 Haltern (DE); Spittka, Rainer, 46562 Voerde (DE); Hoppe, Dirk Dr., 48301 Nottuln (DE)

(57) **Zusammenfassung**

Es wird ein Epoxidharz-freies Beschichtungssystem auf Basis von thermoplastischen Polyestern beschrieben, in welches ein spezielles Zusatzharz als haftungsverbessernder Zusatz eingearbeitet wird.

## Beschreibung

Gegenstand der Erfindung ist ein Epoxidharz-freies Beschichtungssystem auf Basis von thermoplastischen Polyestern in welches ein spezielles Zusatzharz als haftungsverbessernder Anteil eingearbeitet wird.

Auf Basis thermoplastischer Polyester werden seit geraumer Zeit Beschichtungsmaterialien für die verschiedensten Einsatzzwecke hergestellt und vermarktet Üblicherweise werden hierzu auf Compoundierextrudern oder Knetern die für den vorgesehenen Anwendungszweck erforderlichen Zuschlagstoffe, wie Farbpigmente, Füllstoffe, Stabilisatoren, Verlaufmittel, Glanzmittel und/oder sonstige Zusatz- und Hilfsstoffe, in den Polyester eingearbeitet. Der Compound kann dann als Lösung, Folie, Schmelze, Pulver oder in sonstiger Form in dem vorgesehenen Einsatzbereich appliziert werden.

In der Praxis hat sich besonders die Pulverbeschichtung von Metallen nach dem Wirbelsinter- oder Elektrostatik-Verfahren bewährt. Beim Wirbelsinterverfahren werden heiße Metallteile durch Eintauchen in eine durch Luft fluidisierte Wirbelschicht des pulverförmigen Beschichtungsmaterials beschichtet. Hierbei schmilzt der Thermoplast auf der Oberfläche auf und bildet nach Erkalten einen schützenden Überzug. Bei der elektrostatischen Beschichtung wird Pulver mittels Druckluft auf das Metallteil gesprüht, wo es durch Anlegen einer Gleichstrom-Hochspannung haften bleibt. Anschließend erhält man durch Aufschmelzen (z. B. in einem Ofen oder über einer Gasflamme) ebenfalls einen Überzug. Das Beschichtungsmaterial kann auch auf andere Art, z. B. als Schmelze oder Folie, eingesetzt werden.

Obwohl die Herstellung von thermoplastischen Beschichtungspulvern wegen der Kaltvermahlung mit Flüssigstickstoff relativ aufwendig ist, konnte der Marktanteil gegen die Konkurrenz von Naßlacken und reaktiven Systemen gehalten und sogar vergrößert werden. Hier sind umwelttechnologische Aspekte entscheidend, da Beschichtungspulver gänzlich ohne Lösemittel auskommen. Weiterhin haben rein thermoplastische Beschichtungsmaterialien im Vergleich zu reaktiven Systemen verarbeitungstechnische Vorteile, da sie lediglich durch Wärmezufuhr aufgeschmolzen werden und durch Abkühlung härten. Hierdurch bedingt eignen sie sich auch für extrem schnelle Beschichtungsanlagen mit nachgeschalteter Weiterverarbeitung, für die reaktive Systeme in der Regel zu langsam sind. Reaktive Systeme erfordern naturgemäß chemisch reaktionsfreudige Komponenten und Härter, die oftmals toxikologisch bedenklich sind. Außerdem verbleibt nach der Reaktion ein Anteil Restmonomer in der Beschichtung.

Dies sind auch die Gründe, warum beim Nahtschutz von geschweißten Konservendosen bevorzugt thermoplastische Systeme eingesetzt werden. In der Konserve wird die Dosennaht durch thermoplastische Polyester zuverlässig gegen jeglichen Inhaltsstoff geschützt und damit der Inhalt unverändert bewahrt.

Die notwendigen lacktechnischen Eigenschaften die z. B. Haftung, Elastizität und Sterilisierbarkeit der Beschichtung werden nicht durch den verwendeten thermoplastischen Polyester allein bewerkstelligt. Vielmehr hat man erst durch die Zumischung geeigneter Additive deutliche Verbesserungen erzielt. Durch die Einwirkung entsprechender Rezepturen hat man die Eigenschaften so weit optimiert, daß heute Beschichtungen aus thermoplastischen Polyestern sehr gute Gebrauchseigenschaften erreicht haben.

Stand der Technik ist es für die Haftverbesserung Epoxidharze als Zusatz in die thermoplastischen Polyester einzuarbeiten. Das Epoxidharz wird hierbei nicht wie sonst üblich chemisch vernetzt, sondern lediglich mit dem Polyester vermischt, da üblicherweise eingesetzte Polyester keine nennenswerten reaktiven Gruppen besitzen. Die Wirksamkeit des Epoxidharz-Zusatzes im Hinblick auf die lacktechnischen Eigenschaften ist ausgezeichnet und somit können sämtliche Anforderungen an das Beschichtungssystem voll erfüllt werden.

Soweit das Beschichtungssystem im Bereich Lebensmittelverpackung eingesetzt wird, müssen einschlägige Regularien erfüllt werden, wie FDA 175.300 (USA), Richtlinie 90/128 (EU), usw. Gerade hier haben thermoplastische Systeme, wie schon ausgeführt, gegenüber anderen Systemen entscheidende Vorteile.

In jüngster Vergangenheit sind Epoxidharze, die als Beschichtungsmaterial im Bereich Lebensmittelverpackung eingesetzt werden, in der Öffentlichkeit in die Kritik geraten. Spuren von Bisphenol-A-diglycidether (BADGE) werden aus Epoxidharzlacken aus Konservendoseninnenbeschichtungen herausgelöst und mit dem Nahrungsmittel in den menschlichen Organismus aufgenommen In ölhaltigen Fischkonserven wurden sogar unzulässig hohe BADGE-Konzentrationen gemessen, die aus der Innenbeschichtung herausgelöst wurden. BADGE ist nun in Verdacht geraten, nach Aufnahme in den menschlichen Organismus krebserregende und oestrogene Effekte hervorgerufen zu haben. Dies führte dazu, daß der wissenschaftliche Lebensmittelausschuß (SCF) der Europäischen Union (EU) im Juni 1996 eine toxikologische Neubewertung von BADGE vorgenommen hat. Demnach gibt es zwar noch keine Anhaltspunkte für eine krebserregende Wirkung, jedoch fordert das Bundesinstitut für gesundheitlichen Verbraucherschutz und Veterinärmedizin (BgVV) in einer Pressemitteilung vom November 1996 technologische Maßnahmen zur Minimierung der Kontamination von Lebensmitteln. BADGE-Gehalte von mehr als 1 mg/kg werden demnach als gesundheitlich bedenklich eingestuft.

Übliche thermoplastische Beschichtungssysteme enthalten in der Rezeptur einen geringen Prozentsatz Epoxidharz, der natürlich ebenfalls einen gewissen Anteil Restmonomer (BADGE) enthält. Somit ist das im Grunde ökologisch und toxikologisch einwandfreie Beschichtungssystem thermoplastische Polyester doch noch über den Epoxidharzzusatz in die Kritik geraten.

Damit stellte sich die Aufgabe, einen Zusatz für ein Beschichtungssystem zu finden, der toxikologisch völlig unbedenklich ist und mindestens die gleichguten Eigenschaften des Epoxidharzzusatzes gewährleistet.

Überraschenderweise wurde gefunden, daß gemäß der Ansprüche durch Zusatz von Keton- und Aldehydharzen zu Polyestern bestehend aus aliphatischen und/oder cycloaliphatischen und/oder aromatischen mehrbasischen Säuren und/oder deren Anhydride und Hydroxicarbonsäuren und -Derivaten das Eigenschaftsprofil der durch Schmelzauftrag hergestellten Beschichtung gegenüber den reinen Polyestern so verbessert werden kann, daß sie die Sterilisationsprüfung bestehen und auch für Lebensmittelverpackungen geeignet sind.

Derartige Zusatzharze werden üblicherweise zur Erhöhung des Feststoffgehaltes oder zur Glanzerhaltung in lösemittelhaltigen Lacken o.ä. eingesetzt. Eine gebrauchsfertige Beschichtung ist durch den alleinigen Einsatz dieser Harze nicht zu erzielen.

Als zuzusetzende Keton- und Aldehydharze sind solche Kondensationsprodukte geeignet, wie sie in "Lackharze, Chemie, Eigenschaften, Anwendung" Hrsg. D. Stoye und W. Freitag, München 1966, Kap. 6.4 "Keton- und Aldehydharze", beschrieben sind. Keton- und Aldehydharze werden durch Eigenkondensation oder haufiger durch Cokondensation mit Formaldehyd aus aliphatischen, cycloaliphatischen oder aliphatisch-aromatischen Ketonen bzw. Aldehyden gewonnen. Die Kondensation der Monomeren kann mittels basischer, saurer oder neutraler Katalysatoren beschleunigt werden.

Zur Herstellung derartiger Zusatzharze sind geeignet
a) Ketone (wie beispielsweise Aceton, Methylethylketon, Cyclohexanon, Acetophenon und/oder
b) Aldehyde (wie beispielsweise Formaldehyd und Isobutyraldehyd) und/oder
c) Alkylierte Aromaten (wie beispielsweise m-Xylol)

Die Herstellung derartiger Zusatzharze ist in o.g. Stelle beschrieben.

Die Methylethylketon-Formaldehydharze besitzen eine schwache Eigenfärbung und sind in polaren Lösemitteln wie Alkoholen, Estern, Ketonen und Glycolethern löslich Die Hydroxylzahlen liegen im Bereich von 80 bis 190 mg KOH/g. Die Harze sind stark polar, hygroskopisch und weisen einen Sauerstoffgehalt von 21 bis 29 Massenprozent auf Die Molmassen liegen zwischen 3 000 und 5 000 g/mol, der Erweichungsbereich zwischen 80 und 125 °C.

Cyclohexanon und Methylcyclohexanon sind neben der Cokondensation mit Formaldehyd auch zur Selbstkondensation befähigt. Die Erweichungspunkte der hellen, neutralen Harze liegen zwischen 80 und 120 °C.

Acetophenon-Formaldehyd-Harze sind helle, unverseifbare Produkte mit ausreichender Lichtbeständigkeit und Erweichungspunkten von 75 bis 85 °C.

Geeignete kommerzielle Keton- und Aldehydharze sind z. B. Kunstharz AP (Keton aromatisch, aliphatisch), Kunstharz SK (Keton hydriert), Kunstharz 1201 (Keton modifiziert), Kurstharz CA (Keton cycloaliphatisch), Kunstharz TC (Keton cycloaliphatisch) von Hüls.

Die Zusatzharze werden nach ihrer Herstellung vom eingesetzten Katalysator (z. B. NaOH oder KOH) befreit.

Besonders vorteilhaft sind jedoch solche Zusatzharze, die nach ihrer Herstellung in einem weiteren Reaktionsschritt hydriert werden. Ein derartiges Zusatzharz wird beispielsweise erhalten durch
1. Kondensation von aliphatisch-aromatischen Ketonen mit Formaldehyd: 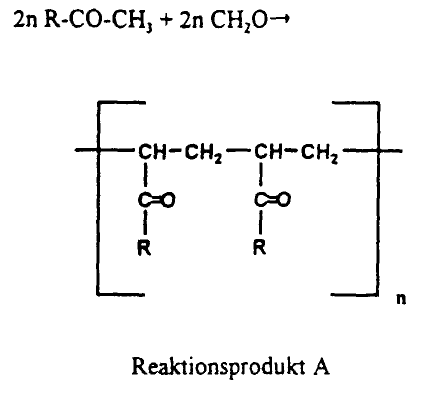 R = C₆H₅
   Das erhaltene Reaktionsprodukt A hat folgende Kenndaten
   Erweichungspunkt (DIN 53 180): 76 bis 82
   Jod-Farbzahl (DIN 612): 1 bis 2,5
2) und Hydrierung des so erhaltenen Kondensationsproduktes A: 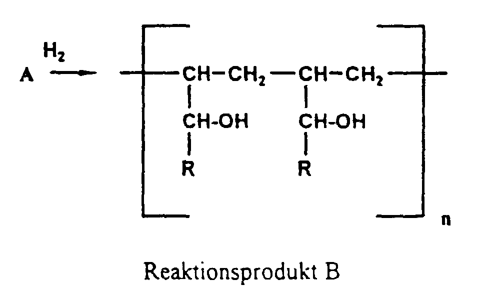 mit R = C₆H₅, C₆H₁₁
   Kenndaten des Reaktionsproduktes B
   Erweichungspunkt: 110 bis 120
   Jod-Farbzahl: ≤ 1
   Derartige Zusatzharze sind in der Regel farblos bzw. weisen eine besonders helle Farbe auf.
3) Das erhaltene Reaktionsprodukt B kann ggf. mit Diisocyanaten weiter modifiziert werden.

Zur Herstellung der Beschichtungsmasse kann das Zusatzharz mit dem Copolyester und den weiteren praxisüblichen Zusatzstoffen (wie z.B. Farbpigmente, Füllstoffe, Stabilisatoren, Verlaufmittel, Glanzmittel und/oder sonstige Zusatz- und Hilfsstoffe) im Extruder zu einem Compound verarbeitet werden.

Das Zusatzharz kann aber auch am Ende der Kondensation des Copolyesters dem schmelzflüssigen Co-Polyester zugesetzt, in diesem homogenisiert und als homogene Mischung mit praxisüblichen Verfahren ausgetragen werden. Hierbei ist darauf zu achten, daß
1) vor Zusatz des Zusatzharzes die Polyesterschmelze abgekühlt wird und
2) die Verweildauer der Polymermischung im Reaktor möglichst kurz ist,
   und damit ein unerwünschter Molmassenabbau des Polyesters vermieden wird.

Das eigenschaftsverbessernde Zusatzharz wird in Mengen von 0,1 bis 15 Gew.-Teilen auf 99,9 bis 85 Gew.-Teilen Basispolyester eingesetzt. Vorzugsweise werden 3 bis 10 Teile Zusatzharz auf 97 bis 90 Teile Copolyester eingesetzt.

Als thermoplastischer Basispolyester in den erfindungsgemäßen Beschichtungsmaterialien wird ein teilkristalliner Polyester mit einer Viskositätszahl > 60 ml/g, vorzugsweise > 70 ml/g, einer Glastemperatur zwischen 0 und 50 °C, vorzugsweise zwischen 10 und 40 °C und einem Schmelzbereich zwischen 150 und 200 °C, vorzugsweise zwischen 160 und 180 °C, eingesetzt.

Der Basispolyester hat als Säurekomponente mindestens eine aromatische Dicarbonsäure wie z.B. Terephthalsäure, sowie mindestens eine aliphatische Dicarbonsäure mit 2 bis 36 Kohlenstoffatomen oder deren esterbildenden Derivate. Auf der Diolseite enthält er vorzugsweise 1,4-Butandiol und fakultativ ein oder mehrere aliphatische Diole mit 2 bis 36 Kohlenstoffatomen.

Das erfindungsgemäße Beschichtungssystem kann als zusätzliche Komponente einen weiteren Polyester enthalten. Dieser Polyester ist teilkristallin und enthält als Säurekomponente mindestens eine aromatische Dicärbonsäure, wie z. B. Terephthalsäure sowie mindestens eine aliphatische Dicarbonsäure mit 2 bis 36 Kohlenstoffatomen oder deren esterbildenden Derivate. Bezüglich der Diolkomponente enthält der Polyester 1,4-Butandiol und fakultativ ein oder mehrere aliphatische Diole mit 2 bis 36 Kohlenstoffatomen. Der Polyester wird in Mengen von 2 bis 60 Massen-%, vorzugsweise 5 bis 50 Massen-% und besonders bevorzugt 10 bis 40 Massen-%, bezogen auf den gesamten Compound, eingesetzt. Er hat eine Viskositätszahl > 60 ml/g, vorzugsweise > 70 ml/g, eine Glastemperatur zwischen -50 und 0 °C, vorzugsweise -40 bis -10 °C und einen Schmelzbereich zwischen 140 bis 200 °C, vorzugsweise 145 bis 170 °C. Durch diesen Polyester bekommt der Compound flexible Eigenschaften und eignet sich besonders zur Beschichtung von Teilen, die nachträglich mechanisch verformt werden.

Die erfindungsgemäßen Beschichtungsmaterialien können für die verschiedensten Einsatzzwecke verwendet werden. Ein besonderes Einsatzgebiet ist die Beschichtung im Bereich der Lebensmittelverpackung. Hierzu werden die für den vorgesehenen Anwendungszweck erforderlichen Zuschlagstoffe, wie Farbpigmente, Füllstoffe, Stabilisatoren, Verlaufmittel, Glanzmittel und/oder sonstige Zusatz- und Hilfsstoffe, in den Polyester eingearbeitet. Der Compound kann dann als Lösung, Folie, Schmelze, Pulver oder in sonstiger Form in dem vorgesehenen Einsatzbereich appliziert werden.

### Vergleichsbeispiel 1: (Thermoplastischer Polyester ohne Zusatz):

Ein thermoplastischer Polyester (nach DE-A 23 46 559) wird unter Zugabe 20 % Titanoxid und 0,5 % eines Verlaufmittels zu einem Compound verarbeitet. Anschließend wird mittels Kaltvermahlung und Siebung ein Pulver < 85 µm hergestellt. Das Pulver wird mittels Elektrostatik-Pistole auf ca. 0,4 mm starke Bleche aufgesprüht und 5 Minuten bei 200 °C in einem Ofen aufgeschmolzen.

Die ca. 60 µm starke Beschichtung hat folgende Eigenschaften:
Haftung: Gitterschnitt GT 0,
Elastizität: Erichsentiefung > 10 mm,
Haftung nach Heißwassertest: Gitterschnitt GT 0,
Haftung nach Essigsäuresterilisation (3 %): Gitterschnitt GT 4,
Haftung nach Milchsäuresterilisation (2 %): Gitterschnitt GT 4
Endbeurteilung: Das Beschichtungssystem verliert seine Haftung nach einem Säureangriff und kann in der Praxis nur begrenzt eingesetzt werden.

### Vergleichsbeispiel 2: (Thermoplastischer Polyester mit Epoxidharzzusatz):

Beschichtungspulver (hergestellt wie in Vergleichsbeispiel 1) aber mit Zusatz von 5 % Epoxidharzzusatz. Analog Beispiel 1 wurde das Pulver mittels Elektrostatik-Pistole auf ca. 0,4 mm starke Bleche aufgesprüht und 5 Minuten bei 200 °C in einem Ofen aufgeschmolzen.

Die ca. 60 µm starke Beschichtung hat folgende Eigenschaften:
Haftung: Gitterschnitt GT 0,
Elastizität: Erichsentiefung > 10 mm,
Haftung nach Heißwassertest: Gitterschnitt GT 0,
Haftung nach Essigsäuresterilisation (3 %): Gitterschnitt GT 0,
Haftung nach Milchsäuresterilisation (2 %): Gitterschnitt GT 0.

### Beispiele:

In den Beispielen wird ein thermoplastischer Polyester (nach DE-A 23 46 559) eingesetzt.

Das Zusatzharz 1 wird durch Kondensation von Cyclohexanon und Formaldehyd hergestellt und anschließend hydriert.
- Kenndaten:: Schmelzpunkt: 92 bis 108 °C
Dichte: ca. 1,14 g/cm³
Farbe (Gardner): < 2

Das Zusatzharz 2 wird erhalten durch
a) Kondensation von Formaldehyd und Acetophenon und
b) anschließende Hydrierung.

- Kenndaten:: Schmelzpunkt: 110 bis 120 °C
Dichte: ca. 1,15 g/cm³
Farbzahl (Gardner): < 1

Mit den Zusatzharzen 1 und 2 werden Beschichtungsmassen hergestellt (Tab. 1)

**Tabelle 1**

| Beschichtungsmassen | | | | |
|---|---|---|---|---|
| | **Bestandteil in Masse %** | | | |
| | **Rezeptur 1** | **Rezeptur 2** | **Rezeptur 3** | **Rezeptur 4** |
| Copolyester 1 | 73 | 70 | 73 | 70 |
| Zusatzharz 1 | | | 3 | 6 |
| Zusatzharz 2 | 3 | 6 | | |
| TiO₂ RTG-30 | 20 | 20 | 20 | 20 |
| Micro Mica W1 | 3,5 | 3,5 | 3,5 | 3,5 |
| Perenol F30 mod | 0,50 | 0,50 | 0,50 | 0,5 |
| **Summe** | **100** | **100** | **100** | **100** |

Micro Mica W1 ist ein Glimmer-Typ, Pherenol F30 mod ein Verlaufmittel auf Basis von Polyacrylat.

Mit den jeweiligen Beschichtungsmassen wurden Beschichtungen aus der Schmelze hergestellt. Die Ergebnisse der anwendungstechnische Prüfung sind in Tabelle 2 zusammengefaßt:

**Tabelle 2**

| Prüfung der Beschichtungen | | | | |
|---|---|---|---|---|
| **Eigenschaft** | **Rezeptur 1** | **Rezeptur 2** | **Rezeptur 3** | **Rezeptur 4** |
| Haftung | GT0 | GT0 | GT0 | GT0 |
| Elastizität Erichsenprüfung | > 10 mm | > 10 mm | > 10 mm | > 10 mm |

| Haftung nach: | | | | |
|---|---|---|---|---|
| Essigsäuresterilisation (3 %) | GT0 | GT0 | GT0 | GT0 |
| Milchsäuresterilisation (2 %) | GT0 | GT0 | GT0 | GT0 |

Endbeurteilung: Die Beschichtungssysteme werden durch Zusatz der Keton-Aldehyd-Zusatzharze sterilisationsfest, die Haftung ist auch nach einem Säureangriff sehr gut, das System kann für alle Anwendungsgebiete eingesetzt werden.

In Vergleichsbeispiel 1 wird deutlich, daß auch ein rezepturoptimierter thermoplastischer Polyester nicht alle Anforderungen an ein Beschichtungssystem erfüllen kann. Vergleichsbeispiel 2 zeigt das technisch derzeit genutzte System, allerdings kann diese Formulierung BADGE freisetzen.

In den Beispielen wird die Anwendung der erfindungsgemäßen, haftungsverbessernden Polyester gezeigt. Sie bieten einen völlig gleichwertigen Ersatz von Epoxidharz bei gleichguten Gebrauchseigenschaften.

## Patentansprüche

1. Beschichtungssystem auf Basis von thermoplastischen Polyestern, Farbpigmenten, Füllstoffen, Verlaufmitteln und weiteren üblichen Hilfsstoffen,
dadurch gekennzeichnet,
daß das Beschichtungssystem einen Polyester bestehend aus
A) aliphatischen und/oder cycloaliphatischen und/oder aromatischen mehrbasischen Säuren und/oder deren Anhydride und Hydroxicarbonsäuren und -Derivaten
und
B) ein Zusatzharz, erhalten durch Kondensation von Ketonen und/oder Aldehyden, in Anteilen von 0,1 bis 15 Gew.-Teilen Zusatzharz auf 99,9 bis 85 Teile Polyester
als eigenschaftsverbessernden Zusatz enthält.

2. Beschichtungssystem nach Anspruch 1,
dadurch gekennzeichnet,
daß 3 bis 10 Teile Zusatzharz auf 97 bis 90 Teile Copolyester eingesetzt werden.

3. Beschichtungssystem nach einem der vorherigen Ansprüche,
dadurch gekennzeichnet,
daß zur Kondensation des Zusatzharzes Cyclohexanon oder Acetophenon und Formaldehyd eingesetzt werden.

4. Beschichtungssystem nach einem der vorherigen Ansprüche,
dadurch gekennzeichnet,
daß das Zusatzharz nach der Kondensation in einem weiteren Schritt hydriert wird.

5. Beschichtungssystem nach einem der vorherigen Ansprüche,
dadurch gekennzeichnet,
daß der Basispolyester eine Glastemperatur zwischen 0 und 50 °C, einen Schmelzbereich zwischen 150 und 200 °C und eine Viskosität > 60 ml/g aufweist.

6. Beschichtungssystem nach einem der vorherigen Ansprüche,
dadurch gekennzeichnet,
daß der Basispolyester eine Glastemperatur zwischen 10 und 40 °C, einen Schmelzbereich zwischen 160 und 180 °C und eine Viskosität > 70 ml/g aufweist

7. Beschichtungssystem nach einem der vorherigen Ansprüche,
dadurch gekennzeichnet,
daß der Basispolyester aus
A) mindestens einer aromatischen mehrbasigen Dicarbonsäure und mindestens einer aliphatischen Dicarbonsäure mit 2 bis 36 Kohlenstoffatomen oder deren esterbildenden Derivate
und
B) 1,4-Butandiol oder 1,4-Butandiol mit einem oder mehreren aliphatischen Diolen mit 2 bis 36 Kohlenstoffatomen
besteht.

8. Beschichtungssystem nach einem der vorherigen Ansprüche,
dadurch gekennzeichnet,
daß das Beschichtungssystem einen weiteren Polyester bestehend aus
A) mindestens einer aromatischen Dicarbonsäure sowie mindestens einer aliphatischen Dicarbonsäure mit 2 bis 36 Kohlenstoffatomen oder deren esterbildenden Derivaten
und
B) 1,4-Butandiol oder 1,4-Butandiol mit einem oder mehreren aliphatischen Diolen mit 2 bis 36 Kohlenstoffatomen
mit einer Glastemperatur zwischen -50 bis 0 °C, einem Schmelzbereich zwischen 140 bis 200 °C und einer Viskositätszahl > 60 ml/g in einer Menge von 2 bis 60 Massen-%, bezogen auf den gesamten Compound, als flexibilisierenden Zusatz enthält.

9. Verfahren zur Herstellung eines Beschichtungssystems nach einem der vorherigen Ansprüche,
dadurch gekennzeichnet,
daß das Zusatzharz mit einem Extruder mit den einzusetzenden Copolyester und allen Zuschlagstoffen (wie z. B. Fuller, Pigment) zu einem Compound verarbeitet wird.

10. Verfahren zur Herstellung eines Beschichtungssystems nach einem der vorherigen Ansprüche,
dadurch gekennzeichnet,
daß bei zum Ende der Herstellung des Copolyesters das Zusatzharz im erforderlichen Massenverhältnis dem schmelzflüssigen Copolyester zugesetzt, in diesem homogenisiert, und zusammen als homogene Mischung ausgetragen wird.

11. Verwendung eines Beschichtungssystems nach einem der vorherigen Ansprüche zum Beschichten von Lebensmittelverpackungen.
